# EUROPEAN PATENT SPECIFICATION

(11) **EP 3 029 914 B1**
(45) Date of publication and mention of the grant of the patent: **28.08.2019**
(21) Application number: 14831240.8
(22) Date of filing: 20.02.2014
(51) Int. Cl.: H04M 1/02, H04N 17/00

(54) **OPTICAL CENTER CALIBRATION METHOD AND DEVICE**
VERFAHREN UND VORRICHTUNG ZUR KALIBRIERUNG EINES OPTISCHEN ZENTRUMS
PROCÉDÉ ET DISPOSITIF D'ÉTALONNAGE D'UN CENTRE OPTIQUE

(30) Priority: 01.08.2013 CN 201310331948
(43) Date of publication of application: 08.06.2016
(73) Proprietor: Xiaomi Inc., Beijing 100085 (CN)
(72) Inventor: GAO, Yuan, Beijing 100085 (CN); ZHANG, Shuo, Beijing 100085 (CN); LI, Shibo, Beijing 100085 (CN)
(74) Representative: Robson, Aidan John
(86) International application number: PCT/CN2014/072283
(87) International publication number: WO 2015/014119

(56) References cited:
- CN-A- 102 609 038
- CN-A- 103 402 116
- CN-U- 201 994 977
- CN-U- 203 086 550
- GB-A- 2 366 471
- JP-A- 2004 287 304
- US-A1- 2011 255 000

## Description

### TECHNICAL FIELD

The present disclosure relates to the field of mobile communication, and more particularly, to a method and a device for adjusting an optical centre.

### BACKGROUND

The mobile phone is generally referred to as cellphone, and camera is a standard configuration widely applied to a variety of mobile phones. The camera is categorized into two types: front camera and rear camera which are arranged at a front surface and a rear surface of the cellphone respectively. The front camera is used to take self-portraits and implement conference meetings, whereas the rear camera is used for regular photography. The rear camera is taken as an example to be explained as follows.

In the rear camera, both a lens window cover and the camera are arranged at a front housing, and both of them are positioned by their individual overall dimensions. The lens window cover is a protective glass of a touch screen, and is printed thereon with a display screen area, a camera area, an Icon area, etc., wherein the camera area is also called as an appearance window. With the user's increasing requirement for the mobile phone appearance, there is a higher demand in the required concentricity between the optical centre of the camera and the centre of the appearance window. Moreover, there are more and more negative user experiences because of camera deviation, i.e., inconcentricity.

With the restriction by the above techniques, and the unavoidable machining tolerance of each component during the processing, in order to avoid the phenomenon of a serious concentricity deviation between the optical centre of the camera and the centre of the appearance window, it is necessary to increase the machining accuracy and decrease the machining tolerance. The phenomenon of concentricity deviation can be only reduced, but can not be avoided. In a mass production processing, there shows specific regularities of distribution suggesting that some products machined have an excellent yield rate; instead, others may not be well. Once the assembling is completed, the status of the concentricity deviation is fixed and cannot be adjusted. Those products only have to be scraped or remanufactured when there has a high concentricity deviation, which will cause a high rejection rate.

JP2004287304A shows elimination of a blurring phenomenon by adjusting the setting angle of an imaging device after completion of the assembly.

### SUMMARY

In order to solve the problem of high rejection rate due to a serious concentricity deviation between the optical centre of the camera and the centre of the appearance window mentioned in the Background, the embodiments of the present disclosure provide a method and a device for adjusting an optical centre. The technical solutions are disclosed as follows.

According to a first aspect of the embodiments of the present disclosure, there is provided a method for adjusting an optical centre, adjusting a position of a camera (3), which is performed after fixedly installing a lens window cover (2) and pre-installing the camera (3), wherein the step of adjusting the position of the camera (3) comprises adjusting a position of an optical centre (8) of the camera (3) on the basis of a centre (9) of an appearance window (4) on the lens window cover (2), so as to achieve a required concentricity between the optical centre (8) of the camera (3) and the centre (9) of the appearance window (4); wherein said step of adjusting the position of the camera (3) comprises: step 100, obtaining an orthographic projection of the camera (3) and the appearance window (4) in a main view direction; step 200, setting an adjusting target (10) and an adjusting area (11) in accordance with the orthographic projection of the camera (3) and the appearance window (4); and step 300, adjusting an actual position of the camera (3) in accordance with a distinction between the adjusting target (10) and the adjusting area (11) to make the adjusting target (10) to be located in the adjusting area (11), whereby achieving the required concentricity between the optical centre (8) of the camera (3) and the centre (9) of the appearance window (4); and wherein the step (100) of obtaining the orthographic projection of the camera comprises obtaining the orthographic projection of the optical centre of the camera and an outer diameter of the camera in the main view direction, and obtaining the orthographic projection of the appearance window comprises obtaining the orthographic projection of the centre of the appearance window and an outer diameter of the appearance window in the main view direction.

Preferably in the present embodiment, in the step 200, the adjusting target is a circle which is concentric with the orthography of the optical centre of the camera in the main view direction, and a diameter of the circle is equal to the outer diameter of the appearance window; and the adjusting area is a circular ring which is concentric with the orthography of the centre of the appearance window in the main view direction, and an outer diameter and an interior diameter of the circular ring are respectively positive and negative position tolerance values of the outer diameter of the appearance window.

Preferably in the present embodiment, in the step 300, an actual X-direction position and Y-direction position of the camera are adjusted in accordance with a distinction between the circle and the circular ring, until the cycle is located within an area of the circular ring.

Preferably in the present embodiment, in the step 200, the adjusting target is a circle which is concentric with the orthography of the optical centre of the camera in the main view direction, and the diameter of the circle is equal to the outer diameter of the camera; and the adjusting area is a circular ring which is concentric with the orthography of the centre of the appearance window in the main view direction, and an outer diameter and an interior diameter of the circular ring are respectively positive and negative position tolerance values of the outer diameter of the camera.

Preferably in the present embodiment, in the step 300, an actual X-direction position and Y-direction position of the camera are adjusted in accordance with a distinction between the circle and the circular ring until the cycle is located within an area of the circular ring.

According to a second aspect of the embodiments of the present disclosure, there is provided a device for adjusting the optical centre of a camera using the method of any one of the method claims, comprising a projector (7), a computer (6), and an adjusting assembly (5), wherein the projector (7) is adapted to obtain an orthographic projection of the camera (3) and of the appearance window (4) in a main view direction; the computer (6) is configured to set an adjusting target (10) and an adjusting area (11) in accordance with the obtained orthographic projection of the camera (3) and the appearance window (4); the adjusting assembly (5) is adapted to adjust the actual position of the camera (3); and wherein the projector (7) is adapted to obtain the orthographic projection of the camera by obtaining the orthographic projection of the optical centre of the camera and an outer diameter of the camera in the main view direction, and is adapted to obtain the orthographic projection of the appearance window by obtaining the orthographic projection of the centre of the appearance window and an outer diameter the appearance window in the main view direction.

Preferably in the present embodiment, the adjusting assembly includes two groups, the two groups of the adjusting assembly are arranged with respect to a horizontal axis and a vertical axis of the optical centre of the camera, the two groups of the adjusting assembly are arranged adjacent to the camera, the two groups of the adjusting assembly contact with the camera.

Each group of the adjusting assembly includes a screw and an elastic sheet, the screw is fixed in a housing, the screw implements a Z-direction movement with respect to the camera, and when screwing in or out the screw, the elastic sheet is pushed to deform and restore, thereby adjusting the actual position of the camera.

Preferably in the present embodiment, the elastic sheet has a U shape on the whole, one end of the elastic sheet is fixed at the housing, the other end of the elastic sheet presses against the camera, and a middle portion of the elastic sheet contacts with the screw.

The technical solutions provided by the embodiments of the present disclosure may have the following beneficial effects:

The method provided by the embodiments in the present disclosure may achieve the required concentricity between the optical centre of the camera and the centre of the appearance window by additionally implementing the step of adjusting the position of the camera after fixedly installing the lens window cover and pre-installing the camera. Hence, each cellphone could achieve an excellent centering effect without scrapping, and the problem of high rejection rate due to a serious concentricity deviation between the optical centre of the camera and the centre of the appearance window mentioned in the Background may be solved.

In addition, the device in the embodiments of the present disclosure has the advantage of ease in operation, and each cellphone can achieve an excellent centering performance through the device.

Furthermore, the present disclosure is not limited to the front camera, and also may be applied to the rear camera.

It should be understood that both the foregoing general description and the following detailed description are exemplary and explanatory only and are not restrictive of the present disclosure, as claimed.

### BRIEF DESCRIPTION OF THE DRAWINGS

In order to explain the technical solutions in the embodiments of the present disclosure more apparently, a simple introduction to the drawings required for describing the embodiments will be given below. Obviously, the drawings described below only illustrate some embodiments of the present disclosure, and for those skilled in the art, other drawings may be obtained based on these drawings without inventive labor.
FIG. 1 is a flow chart of a method for adjusting an optical centre according to an embodiment of the present disclosure;
FIG. 2 is a front view of a cellphone according to an embodiment of the present disclosure;
FIG. 3 is a side view of the cellphone according to the embodiment of the present disclosure;
FIG. 4 is a back view showing that an adjusting assembly is applied to the cellphone according to an embodiment of the present disclosure;
FIG. 5 is a structural schematic diagram showing that a device is applied to the cellphone according to an embodiment of the present disclosure;
FIG. 6 is a view showing a state of an adjusting target and an adjusting area before implementing an adjustment according to an embodiment of the present disclosure;
FIG. 7 is an enlarged view of the adjusting assembly and a camera according to an embodiment of the present disclosure;
FIG. 8 is a view along a A-direction without the adjusting assembly arranged along a Y-direction in FIG. 7;
FIG. 9 is a view showing a state of the adjusting target and the adjusting area after implementing the adjustment according to the embodiment of the present disclosure.

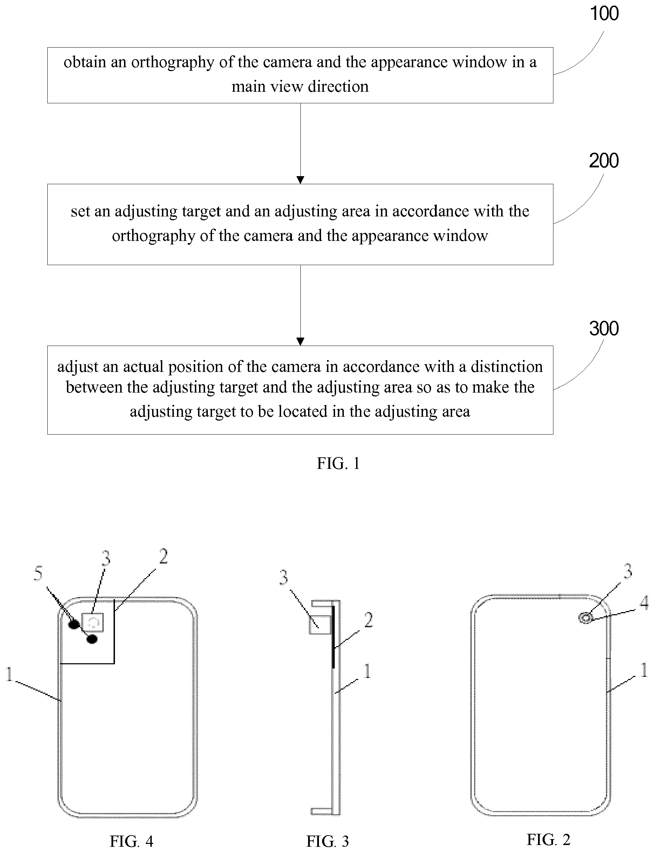

The meanings indicated by the signs shown in FIGs. 2-9 are as follows: 1 housing; 2 lens window cover; 3 camera; 4 appearance window; 5 adjusting assembly; 5A X-direction adjusting assembly; 5B Y-direction adjusting assembly; 51 screw; 52 elastic sheet; 6 computer; 7 projector; 8 optical centre of camera; 9 centre of appearance window; 10 adjusting target; 11 adjusting area.

These drawings are incorporated into and constitute a part of the specification, illustrate embodiments in accordance with the present disclosure, and serve to explain the principle of the present disclosure together with the description.

### DETAILED DESCRIPTION

In order to make the purposes, the technical solutions and the advantages of the present disclosure more apparent, the embodiments of the present disclosure will be further described in detail below with reference to the accompanying drawings.

### First Embodiment

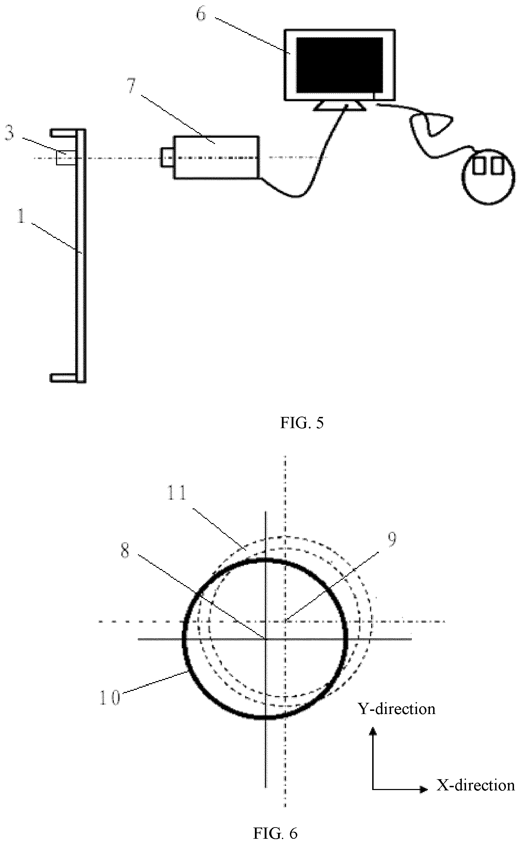

FIG. 1 is a flow chart of a method for adjusting an optical centre according to an embodiment of the present disclosure. The present embodiment is mainly explained by using FIG. 1, but FIGs. 2-11 may also be referred to. The description to the present embodiment is given by taking a cellphone with a camera 3 (see FIG. 2) located at the rear side of the cellphone as an example. The method is a step of adjusting a position of the camera 3 (see FIG. 2), which is additionally performed after fixedly installing a lens window cover 2 (see FIG. 3) and pre-installing the camera 3 (see FIG. 2). The step of adjusting the position of the camera 3 (see FIG. 2) is to adjust the position of an optical centre of the camera 3 (see FIG. 2) on the basis of a centre 9 of an appearance window (see FIG. 6) on the lens window cover 2 (see FIG. 3), so as to satisfy a required concentricity between the optical centre 8 of the camera (see FIG. 6) and the centre 9 of the appearance window (see FIG. 6).

The method in the present disclosure achieves the required concentricity between the optical centre of the camera 3 (see FIG. 3) and the centre 9 of the appearance window by additionally implementing the step of adjusting the position of the camera 3 (see FIG. 3) after fixedly installing the lens window cover 2 (see FIG. 3) and pre-installing the camera 3 (see FIG. 3). Hence, each cellphone could achieve an excellent centering effect without scrapping, and the problem of high rejection rate due to a serious concentricity deviation between the optical centre 8 of the camera (see FIG. 6) and the centre 9 of the appearance window (see FIG. 6) mentioned in the Background may be solved.

Apparently, the person skilled in the art could understand that the present disclosure is not limited to the rear camera 3 (see FIG. 3), and could also be applied to a front camera 3 (see FIG. 3).

FIG. 1 is a flow chart of a method for adjusting an optical centre according to an embodiment of the present disclosure. The step of adjusting the position of the camera 3 includes the following steps.

In step 100, referring to FIG. 5, an orthography of the camera 3 and the appearance window 4 (see FIG. 2) in a main view direction is obtained.

In step 200, referring to FIG. 6, an adjusting target 10 and an adjusting area 11 are set in accordance with the obtained orthography of the camera 3 (see FIG. 2) and the appearance window 4 (see FIG. 2).

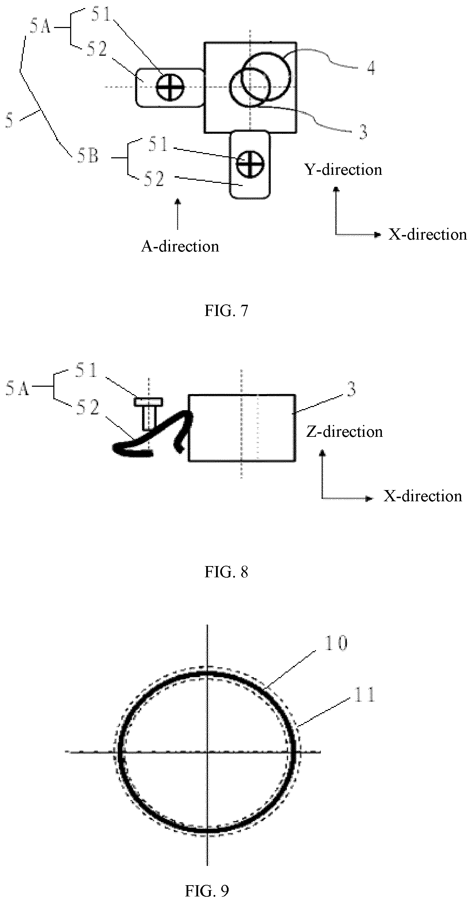

In step 300, referring to FIG 6, an actual position of the camera 3 (see FIG. 7) is adjusted in accordance with a distinction between the adjusting target 10 and the adjusting area 11, such that the adjusting target 10 is located within the adjusting area 11 as shown in FIG. 9, thereby satisfying the required concentricity between the optical centre 8 of the camera and the centre 9 of the appearance window.

Referring to FIG. 1, for instance, in the step 100, the orthography of the optical centre 8 of the camera and an outer diameter of the camera 3 (see FIG. 2) in the main view direction is obtained, and the orthography of the centre 9 of the appearance window and an outer diameter of the appearance window 4 (see FIG. 2) in the main view direction is obtained.
For instance, as shown in FIG. 6, in the step 200, the adjusting target 10 is a circle which is concentric with the orthography of the optical centre 8 of the camera in the main view direction, and a diameter of the circle is equal to the outer diameter of the appearance window 4 (see FIG. 2). The adjusting area 11 is a circular ring which is concentric with the orthography of the centre 9 of the appearance window in the main view direction, and an outer diameter and an interior diameter of the circular ring are respectively positive and negative position tolerance values of the outer diameter of the appearance window 4 (see FIG. 2).

Still referring to FIG. 6, in the step 300, the actual X-direction position and Y-direction position of the camera 3 (see FIG. 7) are adjusted as shown in FIG. 9, in accordance with a distinction between the circle and the circular ring, until the cycle is located within an area of the circular ring.

As shown in FIG. 6, in the step 200, the adjusting target 10 is a circle which is concentric with the orthography of the optical centre 8 of the camera in the main view direction, and the diameter of the circle is equal to the outer diameter of the camera 3 (see FIG. 2). The adjusting area 11 is a circular ring which is concentric with the orthography of the centre 9 of the appearance window in the main view direction, and an outer diameter and an interior diameter of the circular ring are respectively positive and negative position tolerance values of the outer diameter of the camera 3 (see FIG. 3).

Referring to FIG. 6, in the step 300, the actual X-direction position and Y-direction position of the camera 3 (see FIG. 7) are adjusted as shown in FIG. 9, in accordance with a distinction between the circle and the circular ring, until the cycle is located within an area of the circular ring.

### Second Embodiment

FIG. 5 is a device which is applied in the method for adjusting the optical centre according to an illustrative embodiment. The present embodiment is explained mainly depending on FIG.5, but FIG. 2-FIG. 9 may be also referred to. The device includes a projector 7, a computer 6, and an adjusting assembly 5 (see FIG. 7). The projector 7 is to obtain an orthography of a camera 3 and an appearance window 4 (see FIG. 2) in a main view direction, and transmit the orthography to the computer 6. The computer 6 sets an adjusting target 10 (see FIG. 6) and an adjusting area 11 (see FIG. 6) in accordance with the obtained orthography of the camera 3 and the appearance window 4 (see FIG. 2). The adjusting assembly 5 (see FIG. 7) is to adjust the actual position of the camera 3.

With the device in the present disclosure, each cellphone could achieve an excellent centering effect without scrapping, and the problem of high rejection rate due to a serious concentricity deviation between the optical centre 8 of the camera (see FIG. 6) and the centre 9 of the appearance window (see FIG. 6) mentioned in the Background may be solved. Also, the device in the present disclosure could provide an ease in operation, and each cellphone can achieve an excellent centering effect through the device in the present disclosure.

Apparently, the person skilled in the art could understand that the present disclosure is not limited to the rear camera 3 (see FIG. 3), and could also be applied to a front camera.

For instance, as shown in FIG. 7, the adjusting assembly 5 includes two groups, i.e., an X-direction adjusting assembly 5A and a Y-direction adjusting assembly 5B. The adjusting assembly 5, i.e., the X-direction adjusting assembly 5A and the Y-direction adjusting assembly 5B are arranged with respect to a horizontal axis and a vertical axis of the optical centre 8 of the camera. The adjusting assembly 5, i.e., the X-direction adjusting assembly 5A and the Y-direction adjusting assembly 5B are arranged adjacent to the camera 3. The adjusting assembly 5, i.e., the X-direction adjusting assembly 5A and the Y-direction adjusting assembly 5B contact with the camera 3 respectively.

Each group of the adjusting assembly, i.e., both the X-direction adjusting assembly 5A and the Y-direction adjusting assembly 5B include a screw 51 and an elastic sheet 52. The screw 51 is fixed in a housing 1. With reference to FIG. 8, the screw 51 could implement a Z-direction movement with respect to the camera 3. When screwing in or out the screw 51, an interference amount between a front end of the screw 51 and the elastic sheet 52 changes, which pushes the elastic sheet 52 to deform and restore, thereby adjusting the actual position of the camera 3.

In the present embodiment, as shown in FIG. 8, the elastic sheet 52 has a U-shape on the whole. One end of the elastic sheet 52 is fixed at the housing 1, and the other end of which presses against the camera 3. In addition, a middle portion of the elastic sheet 52 contacts with the screw 51.

In the present embodiment, the camera 3 moves toward the right side along the X-direction when screwing in the screw 51. Conversely, the camera 3 moves toward the left side along the X-direction when screwing out the screw 51. The "left" and "right" in the present embodiment is the left and right defined on the basis of FIG. 8.

With reference to FIG. 8, the X-direction adjusting assembly 5A and the Y-direction adjusting assembly 5B are adjusted until the adjusting target 10 is located within the adjusting area 11 as shown in FIG. 9, thereby achieving the required concentricity between the optical centre 8 of the camera and the centre 9 of the appearance window.

The serial numbers of the above embodiments of the present disclosure are only used for depiction, but not for indicating the superiority and inferiority of the embodiments.

## Claims

1. A method for adjusting an optical centre, adjusting a position of a camera (3), which is performed after fixedly installing a lens window cover (2) and pre-installing the camera (3), wherein the step of adjusting the position of the camera (3) comprises adjusting a position of an optical centre (8) of the camera (3) on the basis of a centre (9) of an appearance window (4) on the lens window cover (2), so as to achieve a required concentricity between the optical centre (8) of the camera (3) and the centre (9) of the appearance window (4);
wherein said step of adjusting the position of the camera (3) comprises:
step 100, obtaining an orthographic projection of the camera (3) and the appearance window (4) in a main view direction;
step 200, setting an adjusting target (10) and an adjusting area (11) in accordance with the orthographic projection of the camera (3) and the appearance window (4); and
step 300, adjusting an actual position of the camera (3) in accordance with a distinction between the adjusting target (10) and the adjusting area (11) to make the adjusting target (10) to be located in the adjusting area (11), whereby achieving the required concentricity between the optical centre (8) of the camera (3) and the centre (9) of the appearance window (4); and
wherein the step (100) of obtaining the orthographic projection of the camera comprises obtaining the orthographic projection of the optical centre of the camera and an outer diameter of the camera in the main view direction, and obtaining the orthographic projection of the appearance window comprises obtaining the orthographic projection of the centre of the appearance window and an outer diameter of the appearance window in the main view direction

2. The method as claimed in claim 1, **characterized in that** in said step 200, the adjusting target (10) is a circle which is concentric with the orthographic projection of the optical centre (8) of the camera (3) in the main view direction, and a diameter of the circle is equal to the outer diameter of the appearance window (4); and the adjusting area (11) is a circular ring which is concentric with the orthographic projection of the centre (9) of the appearance window (4) in the main view direction, and an outer diameter and an interior diameter of the circular ring are respectively positive and negative position tolerance values of the outer diameter of the appearance window (4).

3. The method as claimed in claim 2, **characterized in that** in said step 300, an actual X-direction position and Y-direction position of the camera (3) are adjusted in accordance with a distinction between the circle and the circular ring, until the cycle is located within an area of the circular ring.

4. The method as claimed in claim 1, **characterized in that** in said step 200, the adjusting target (10) is a circle which is concentric with the orthographic projection of the optical centre (8) of the camera (3) in the main view direction, and the diameter of the circle is equal to the outer diameter of the camera (3); and the adjusting area (11) is a circular ring which is concentric with the orthographic projection of the centre (9) of the appearance window (4) in the main view direction, and an outer diameter and an interior diameter of the circular ring are respectively positive and negative position tolerance values of the outer diameter of the camera (3).

5. The method as claimed in claim 4, **characterized in that** in said step 300, an actual X-direction position and Y-direction position of the camera (3) are adjusted in accordance with a distinction between the circle and the circular ring until the cycle is located within an area of the circular ring.

6. A device for adjusting the optical centre of a camera using the method of any one of claims 1-5, comprising a projector (7), a computer (6), and an adjusting assembly (5), wherein the projector (7) is adapted to obtain an orthographic projection of the camera (3) and of the appearance window (4) in a main view direction;
the computer (6) is configured to set an adjusting target (10) and an adjusting area (11) in accordance with the obtained orthographic projection of the camera (3) and the appearance window (4);
the adjusting assembly (5) is adapted to adjust the actual position of the camera (3); and wherein the projector (7) is adapted to obtain the orthographic projection of the camera by obtaining the orthographic projection of the optical centre of the camera and an outer diameter of the camera in the main view direction, and is adapted to obtain the orthographic projection of the appearance window by obtaining the orthographic projection of the centre of the appearance window and an outer diameter the appearance window in the main view direction.

7. The device as claimed in claim 6, **characterized in that** the adjusting assembly (5) comprises two groups, the two groups of the adjusting assembly (5) are arranged with respect to a horizontal axis and a vertical axis of the optical centre (8) of the camera (3), the two groups of the adjusting assembly (5) are arranged adjacent to the camera (3), the two groups of the adjusting assembly (5) contact with the camera (3),
wherein each group of the adjusting assembly (5) comprises a screw (51) and an elastic sheet (52), the screw (51) is fixed in a housing (1), the screw (51) implements a Z-direction movement with respect to the camera (3), and when screwing in or out the screw (51), the elastic sheet (52) is pushed to deform and restore, thereby adjusting the actual position of the camera (3).

8. The device as claimed in claim 7, **characterized in that** the elastic sheet (52) has a U shape on the whole, one end of the elastic sheet (52) is fixed at the housing (1), the other end of the elastic sheet (52) presses against the camera (3), and a middle portion of the elastic sheet (52) contacts with the screw (51).

## Patentansprüche

1. Verfahren zum Justieren eines optischen Zentrums, zum Justieren einer Position einer Kamera (3), das nach dem festen Installieren einer Linsenfensterabdeckung (2) und dem Vorinstallieren der Kamera (3) durchgeführt wird, wobei der Schritt des Justierens der Position der Kamera (3) das Justieren einer Position eines optischen Zentrums (8) der Kamera (3) auf der Basis eines Zentrums (9) eines Erscheinungsfensters (4) auf der Linsenfensterabdeckung (2) beinhaltet, um eine erforderliche Konzentrizität zwischen dem optischen Zentrum (8) der Kamera (3) und dem Zentrum (9) des Erscheinungsfensters (4) zu erzielen;
wobei der genannte Schritt des Justierens der Position der Kamera (3) Folgendes beinhaltet:
Schritt 100, Einholen einer orthografischen Projektion der Kamera (3) und des Erscheinungsfensters (4) in einer Hauptansichtsrichtung;
Schritt 200, Einstellen eines Justierziels (10) und eines Justierbereichs (11) gemäß der orthografischen Projektion der Kamera (3) und des Erscheinungsfensters (4); und
Schritt 300, Justieren einer tatsächlichen Position der Kamera (3) gemäß einer Unterscheidung zwischen dem Justierziel (10) und dem Justierbereich (11), um zu bewirken, dass sich das Justierziel (10) im Justierbereich (11) befindet, um die benötigte Konzentrizität zwischen dem optischen Zentrum (8) der Kamera (3) und dem Zentrum (9) des Erscheinungsfensters (4) zu erzielen; und
wobei der Schritt (100) des Einholens der orthografischen Projektion der Kamera das Einholen der orthografischen Projektion des optischen Zentrums der Kamera und eines Außendurchmessers der Kamera in der Hauptbetrachtungsrichtung beinhaltet und das Einholen der orthografischen Projektion des Erscheinungsfensters das Einholen der orthografischen Projektion des Zentrums des Erscheinungsfensters und eines Außendurchmessers des Erscheinungsfensters in der Hauptbetrachtungsrichtung beinhaltet.

2. Verfahren nach Anspruch 1, **dadurch gekennzeichnet, dass** in dem genannten Schritt 200 das Justierziel (10) ein Kreis ist, der mit der orthografischen Projektion des optischen Zentrums (8) der Kamera (3) in der Hauptbetrachtungsrichtung konzentrisch ist, und ein Durchmesser des Kreises gleich dem Außendurchmesser des Erscheinungsfensters (4) ist; und der Justierbereich (11) ein kreisförmiger Ring ist, der mit der orthografischen Projektion des Zentrums (9) des Erscheinungsfensters (4) in der Hauptbetrachtungsrichtung konzentrisch ist, und ein Außendurchmesser und ein Innendurchmesser des kreisförmigen Rings relativ positive und negative Positionstoleranzwerte des Außendurchmessers des Erscheinungsfensters (4) sind.

3. Verfahren nach Anspruch 2, **dadurch gekennzeichnet, dass** in dem genannten Schritt 300 eine tatsächliche X-Richtungsposition und Y-Richtungsposition der Kamera (3) gemäß einer Unterscheidung zwischen dem Kreis und dem kreisförmigen Ring justiert werden, bis sich der Kreis in einem Bereich des kreisförmigen Rings befindet.

4. Verfahren nach Anspruch 1, **dadurch gekennzeichnet, dass** in dem genannten Schritt 200 das Justierziel (10) ein Kreis ist, der mit der orthografischen Projektion des optischen Zentrums (8) der Kamera (3) in der Hauptbetrachtungsrichtung konzentrisch ist, und der Durchmesser des Kreises gleich dem Außendurchmesser der Kamera (3) ist; und der Justierbereich (11) ein kreisförmiger Ring ist, der mit der orthografischen Projektion des Zentrums (9) des Erscheinungsfensters (4) in der Hauptbetrachtungsrichtung konzentrisch ist, und ein Außendurchmesser und ein Innendurchmesser des kreisförmigen Rings jeweils positive und negative Positionstoleranzwerte des Außendurchmessers der Kamera (3) sind.

5. Verfahren nach Anspruch 4, **dadurch gekennzeichnet, dass** in dem genannten Schritt 300 eine tatsächliche X-Richtungsposition und Y-Richtungsposition der Kamera (3) gemäß einer Unterscheidung zwischen dem Kreis und dem kreisförmigen Ring justiert werden, bis sich der Kreis in einem Bereich des kreisförmigen Rings befindet.

6. Gerät zum Justieren des optischen Zentrums einer Kamera mit dem Verfahren nach einem der Ansprüche 1-5, der einen Projektor (7), einen Computer (6) und eine Justierbaugruppe (5) umfasst, wobei der Projektor (7) zum Einholen einer orthografischen Projektion der Kamera (3) und des Erscheinungsfensters (4) in einer Hauptbetrachtungsrichtung ausgelegt ist;
wobei der Computer (6) zum Setzen eines Justierziels (10) und eines Justierbereichs (11) gemäß der eingeholten orthografischen Projektion der Kamera (3) und des Erscheinungsfensters (4) konfiguriert ist;
wobei die Justierbaugruppe (5) zum Justieren der tatsächlichen Position der Kamera (3) ausgelegt ist; und
wobei der Projektor (7) zum Einholen der orthografischen Projektion der Kamera durch Einholen der orthografischen Projektion des optischen Zentrums der Kamera und eines Außendurchmessers der Kamera in der Hauptbetrachtungsrichtung ausgelegt ist und zum Einholen der orthografischen Projektion des Erscheinungsfensters durch Einholen der orthografischen Projektion des Zentrums des Erscheinungsfensters und eines Außendurchmessers des Erscheinungsfenster in der Hauptbetrachtungsrichtung ausgelegt ist.

7. Gerät nach Anspruch 6, **dadurch gekennzeichnet, dass** die Justierbaugruppe (5) zwei Gruppen umfasst, wobei die zwei Gruppen der Justierbaugruppe (5) mit Bezug auf eine horizontale Achse und eine vertikale Achse des optischen Zentrums (8) der Kamera (3) ausgelegt sind, die beiden Gruppen der Justierbaugruppe (5) neben der Kamera (3) angeordnet sind, die zwei Gruppen der Justierbaugruppe (5) mit der Kamera (3) in Kontakt sind,
wobei jede Gruppe der Justierbaugruppe (5) eine Schraube (51) und eine elastische Folie (52) umfasst, wobei die Schraube (51) in einem Gehäuse (1) befestigt ist, die Schraube (51) eine Bewegung in einer Z-Richtung mit Bezug auf die Kamera (3) implementiert, und beim Ein- und Ausschrauben der Schraube (51) gegen die elastische Folie (52) gedrückt wird, so dass sie sich verformt und zurückstellt, um dadurch die tatsächliche Position der Kamera (3) zu justieren.

8. Gerät nach Anspruch 7, **dadurch gekennzeichnet, dass** die elastische Folie (52) insgesamt eine U-Form hat, wobei ein Ende der elastischen Folie (52) an dem Gehäuse (1) befestigt ist, das andere Ende der elastischen Folie (529 gegen die Kamera (3) drückt und ein mittlerer Teil der elastischen Folie (52) Kontakt mit der Schraube (51) hat.

## Revendications

1. Procédé d'ajustement d'un centre optique, d'ajustement d'une position d'une caméra (3), qui est réalisée après l'installation de manière permanente d'un couvercle de fenêtre d'objectif (2) et la pré-installation de la caméra (3), dans lequel l'étape d'ajustement de la position de la caméra (3) comprend l'ajustement d'une position d'un centre optique (8) de la caméra (3) en fonction d'un centre (9) d'une fenêtre d'apparence (4) sur le couvercle de fenêtre d'objectif (2), de manière à parvenir à une concentricité requise entre le centre optique (8) de la caméra (3) et le centre (9) de la fenêtre d'apparence (4) ;
dans lequel ladite étape d'ajustement de la position de la caméra (3) comprend :
étape 100, l'obtention d'une projection orthographique de la caméra (3) et de la fenêtre d'apparence (4) dans une direction de visée principale ;
étape 200, le réglage d'une cible d'ajustement (10) et d'une zone d'ajustement (11) conformément à la projection de la caméra (3) et de la fenêtre d'apparence (4) ; et
étape 300, l'ajustement d'une position réelle de la caméra (3) conformément à une distinction entre la cible d'ajustement (10) et la zone d'ajustement (11) pour faire en sorte que la cible d'ajustement (10) soit placée dans la zone d'ajustement (11), parvenant ainsi à la concentricité requise entre le centre optique (8) de la caméra (3) et le centre (9) de la fenêtre d'apparence (4) ; et
dans lequel
l'étape (100) d'obtention de la projection orthographique de la caméra comprend l'obtention de la projection orthographique du centre optique de la caméra et d'un diamètre extérieur de la caméra dans la direction de visée principale, et l'obtention de la projection orthographique de la fenêtre d'apparence comprend l'obtention de la projection orthographique du centre de la fenêtre d'apparence et d'un diamètre extérieur de la fenêtre d'apparence dans la direction de visée principale.

2. Procédé selon la revendication 1 **caractérisé en ce qu'**à ladite étape 200, la cible d'ajustement (10) est un cercle qui est concentrique avec la projection orthographique du centre optique (8) de la caméra (3) dans la direction de visée principale, et un diamètre du cercle est égal au diamètre extérieur de la fenêtre d'apparence (4) ; et la zone d'ajustement (11) est un anneau circulaire qui est concentrique avec la projection orthographique du centre (9) de la fenêtre d'apparence (4) dans la direction de visée principale, et un diamètre extérieur et un diamètre intérieur de l'anneau circulaire sont respectivement des valeurs de tolérance de position positive et négative du diamètre extérieur de la fenêtre d'apparence (4).

3. Procédé selon la revendication 2 **caractérisé en ce qu'**à ladite étape 300, une position réelle dans le sens X et une position réelle dans le sens Y de la caméra (3) sont ajustées conformément à une distinction entre le cercle et l'anneau circulaire, jusqu'à ce que le cycle soit situé à l'intérieur d'une aire de l'anneau circulaire.

4. Procédé selon la revendication 1 **caractérisé en ce qu'**à ladite étape 200, la cible d'ajustement (10) est un cercle qui est concentrique avec la projection orthographique du centre optique (8) de la caméra (3) dans la direction de visée principale, et le diamètre du cercle est égal au diamètre extérieur de la caméra (3) ; et la zone d'ajustement (11) est un anneau circulaire qui est concentrique avec la projection orthographique du centre (9) de la fenêtre d'apparence (4) dans la direction de visée principale, et un diamètre extérieur et un diamètre intérieur de l'anneau circulaire sont respectivement des valeurs de tolérance de position positive et négative du diamètre extérieur de la caméra (3).

5. Procédé selon la revendication 4 **caractérisé en ce qu'**à ladite étape 300, une position réelle dans le sens X et une position réelle dans le sens Y de la caméra (3) sont ajustées conformément à une distinction entre le cercle et l'anneau circulaire, jusqu'à ce que le cycle soit situé à l'intérieur d'une aire de l'anneau circulaire.

6. Dispositif d'ajustement du centre optique d'une caméra à l'aide du procédé selon l'une quelconque des revendications 1 à 5, comprenant un projecteur (7), un ordinateur (6), et un ensemble d'ajustement (5), dans lequel
le projecteur (7) est adapté pour obtenir une projection orthographique de la caméra (3) et de la fenêtre d'apparence (4) dans une direction de visée principale ;
l'ordinateur (6) est configuré pour régler une cible d'ajustement (10) et une zone d'ajustement (11) conformément à la projection orthographique obtenue de la caméra (3) et de la fenêtre d'apparence (4) ;
l'ensemble d'ajustement (5) est adapté pour ajuster la position réelle de la caméra (3) ; et dans lequel
le projecteur (7) est adapté pour obtenir la projection orthographique de la caméra en obtenant la projection orthographique du centre optique de la caméra et un diamètre extérieur de la caméra dans la direction de visée principale, et est adapté pour obtenir la projection orthographique de la fenêtre d'apparence en obtenant la projection orthographique du centre de la fenêtre d'apparence et un diamètre extérieur de la fenêtre d'apparence dans la direction de visée principale.

7. Dispositif selon la revendication 6, **caractérisé en ce que** l'ensemble d'ajustement (5) comprend deux groupes, les deux groupes de l'ensemble d'ajustement (5) sont agencés relativement à un axe horizontal et un axe vertical du centre optique (8) de la caméra (3), les deux groupes de l'ensemble d'ajustement (5) sont agencés adjacents à la caméra (3), les deux groupes de l'ensemble d'ajustement (5) entrant en contact avec la caméra (3),
dans lequel chaque groupe de l'ensemble d'ajustement (5) comprend une vis (51) et une feuille élastique (52), la vis (51) est fixée dans un logement (1), la vis (51) décrit un mouvement dans le sens Z par rapport à la caméra (3), et lors du vissage ou du dévissage de la vis (51), la feuille élastique (52) est poussée pour se déformer et reprendre sa forme initiale, ajustant ainsi la position réelle de la caméra (3).

8. Dispositif selon la revendication 7, **caractérisé en ce que** la feuille élastique (52) a dans l'ensemble une forme en U, une extrémité de la feuille élastique (52) est fixée au niveau du logement (1), l'autre extrémité de la feuille élastique (52) presse contre la caméra (3), et une partie centrale de la feuille élastique (52) entre en contact avec la vis (51).
